# EUROPÄISCHE PATENTSCHRIFT

(11) **EP 0 775 406 B1**
(45) Veröffentlichungstag und Bekanntmachung des Hinweises auf die Patenterteilung: **05.01.2000**
(21) Anmeldenummer: 96914369.2
(22) Anmeldetag: 07.06.1996
(51) Int. Cl.: H04L 25/08

(54) **SYSTEM ZUM FEHLERSICHEREN ÜBERTRAGEN VON DATEN ÜBER EINEN DIFFERENTIELLEN BUS**
SYSTEM FOR THE FAIL-SAFE TRANSMISSION OF DATA VIA A DIFFERENTIAL BUS
SYSTEME DE TRANSMISSION DE DONNEES A SURETE INTEGREE, PAR L'INTERMEDIAIRE D'UN BUS DIFFERENTIEL

(30) Priorität: 08.06.1995 DE 19520930; 24.06.1995 DE 19523031
(43) Veröffentlichungstag der Anmeldung: 28.05.1997
(73) Patentinhaber: Koninklijke Philips Electronics N.V., 5621 BA Eindhoven (NL); Philips Patentverwaltung GmbH, 22335 Hamburg (DE)
(72) Erfinder: EISELE, Harald, D-25421 Pinneberg (DE); MORES, Robert, D-22547 Hamburg (DE)
(74) Vertreter: von Laue, Hanns-Ulrich, Dipl.-Ing.
(86) Internationale Anmeldenummer: IB9600564
(87) Internationale Veröffentlichungsnummer: WO9642159

(56) Entgegenhaltungen:
- EP-A- 0 239 731
- EP-A- 0 506 237
- EP-A- 0 529 602
- FR-A- 2 691 597

## Beschreibung

Die Erfindung betrifft ein System zum Übertragen von binären Daten zwischen einer Anzahl Stationen, die über eine gemeinsame erste und eine gemeinsame zweite Leitung miteinander verbunden sind, wobei beim einen logischen Wert der binären Daten die erste Leitung ein niedriges Potential und die zweite Leitung ein hohes Potential und beim anderen logischen Wert der binären Daten die erste Leitung ein hohes Potential und die zweite Leitung ein niedriges Potential hat und der logische Wert der binären Daten zum Abgeben an einem Datenausgang von dem Potential wenigstens einer Leitung abgeleitet ist.

Die in derartigen Systemen verwendeten Leitungen zur Übertragung von Daten werden häufig als differentieller Bus bezeichnet, da der logische Wert der übertragenen binären Daten durch die Differenz zwischen den Potentialen auf den beiden Leitungen unter Berücksichtigung des Vorzeichens der Differenz dargestellt wird. Ein solcher differenzieller Bus hat den Vorteil, daß von außerhalb eingestreute elektromagnetische Störungen die Potentiale auf beiden Leitungen im wesentlichen in gleicher Weise beeinflussen, so daß die Differenz der Potentiale nahezu unverändert bleibt. Dadurch ergibt sich eine sehr störsichere Datenübertragung. Hinzu kommt, daß sich die von den beiden Leitungen bei Potentialwechseln ausgesandten elektromagnetischen Störungen im wesentlichen kompensieren.

Systeme mit mehreren Stationen, die über einen differentiellen Bus verbunden sind, werden häufig in einer Umgebung verwendet, in der die beiden Leitungen insbesondere auch mechanischen Belastungen ausgesetzt sind, so daß es zu Beschädigungen dieser Leitungen kommen kann. Ein Beispiel hierfür ist der Einsatz eines derartigen Systems in Kraftfahrzeugen. Hinzu kommt, daß die beiden Leitungen auch zumindest teilweise in großer Nähe von metallischen Teilen verlaufen, die geerdet sind.

Aus der EP 0 529 602 A3 ist eine Empfängerschaltung bekannt, mittels der es möglich ist, Signale zu empfangen und auszuwerten, auch wenn eine der Leitungen gestört ist. Dafür werden drei Komparatoren verwendet, denen je ein Zähler und ein UND-Gatter nachgeschaltet sind. Der eine Komparator vergleicht die Signale auf beiden Leitungen miteinander und arbeitet somit für den ungestörten Fall, während die anderen beiden Komparatoren die Signale auf jeweils einer Leitung mit einem festen Schwellenwert vergleichen, um auch bei einer Störung auf einer der Leitungen die Signale auf der anderen Leitung allein auswerten zu können. Die Zähler dienen dabei als Zeitglieder, die das zugehörige UND-Gatter ansteuern und die Weiterleitung des hohen Ausgangssignals des Komparators sperren, wenn dessen Dauer eine vorgegebene Zeitdauer überschreitet. Den UND-Gattern ist eine Auswahlschaltung nachgeordnet, die die Ausgangssignale des einen Komparators für die Auswertung der Signaldifferenz beider Leitungen am Ausgang abgibt, wenn solche Ausgangssignale erzeugt werden, d.h. die Leitungen ungestört sind, und anderenfalls die Ausgangssignale der anderen Komparatoren am Ausgang abgibt. Bei bestimmten Leitungsfehlern und Signalen können durch das verzögerte Sperren der UND-Gatter und die Umschaltvorgänge in der Auswahlschaltung beim Auftreten eines Fehlers einige Signale verlorengehen, d.h. nicht ausgewertet werden, so daß die gesamte Nachricht wiederholt werden muß.

Aufgabe der Erfindung ist es daher, ein System der eingangs genannten Art anzugeben, bei dem auch bei bestimmten Beschädigungen wenigstens eines der beiden Leiter eine Datenübertragung ohne Datenverlust noch weiterhin möglich ist, wenn auch mit verringerter Störsicherheit.

Diese Aufgabe wird erfindungsgemäß dadurch gelöst, daß in wenigstens einer ersten Station wenigstens ein erster Komparator vorgesehen ist, der mit beiden Leitungen galvanisch gekoppelt ist, um das Potential auf der ersten Leitung vom Potential auf der zweiten Leitung zu subtrahieren und ein Ausgangssignal mit einem ersten Wert an einem ersten Komparatorausgang abzugeben, wenn die durch die Subtraktion gebildete Differenz einen ersten Schwellenwert übersteigt, wobei dieser erste Schwellenwert so gewählt ist, daß das Ausgangssignal am ersten Komparator auch dann seinen Wert ändert, wenn nur auf einer der beiden Leitungen ein Potentialwechsel auftritt und die andere Leitung ein Potential entsprechend dem einen logischen Wert der binären Daten hat.

Durch die Verwendung eines Komparators, der nicht nur die Differenz der Potentiale auf beiden Leitungen bildet, sondern diese Differenz auch mit einem bestimmten ersten Schwellwert vergleicht, wird am Ausgang dieses Komparators das übertragene Datensignal auch dann wiedergegeben, wenn eine der beiden Leitungen unterbrochen ist. Da jede Leitung wie bekannt über einen Widerstand derart mit einem niedrigen bzw. hohen Potential verbunden ist, daß die Potentiale auf der Leitung dem einen logischen Wert der binären Daten entsprechen, wenn von keiner Station ein Signal auf die Leitungen eingespeist wird, und diese Widerstände vorzugsweise bei jeder Station angeordnet sind, hat eine unterbrochene Leitung ein weitgehend definiertes Potential, so daß die nicht unterbrochene Leitung weiterhin für die Übertragung von Daten verwendbar ist. Durch die erfindungsgemäßen Maßnahmen führt also eine Unterbrechung nur einer Leitung noch nicht zu einer Störung der Datenübertragung. Auch eine Verbindung zwischen der ersten Leitung und einem geerdeten Metallteil, d.h. Masseschluß der ersten Leitung, führt nicht zu einer Störung der Datenübertragung.

Die beschriebenen Fehler, insbesondere eine Unterbrechung einer der beiden Leitungen, können als die wahrscheinlichsten Fehler angesehen werden. Es sind jedoch weitere Fehler möglich, insbesondere kann auch die zweite Leitung mit einem geerdeten Metallteil Kontakt bekommen oder beide Leitungen können einen Kurzschluß untereinander haben. Um auch in solch einem Fehlerfalle noch eine Datenübertragung grundsätzlich zu ermöglichen, ist eine Ausgestaltung der Erfindung dadurch gekennzeichnet, daß in jeder ersten Station ein zweiter Komparator vorgesehen ist, der mit der ersten Leitung gekoppelt ist, um ein Ausgangssignal mit dem ersten Wert an einem zweiten Komparatorausgang zu erzeugen, wenn das Potential auf der ersten Leitung oberhalb eines zweiten Schwellenwerts liegt, und daß ein erster Speicher vorgesehen ist, der über ein erstes Verzögerungsglied mit einer ersten Verzögerungszeit mit dem ersten Komparatorausgang gekoppelt ist und von dem ein Ausgang mit einem Umschalter gekoppelt ist, um den Datenausgang vom ersten Komparatorausgang auf den zweiten Komparatorausgang zu schalten, wenn während einer Zeitdauer entsprechend der ersten Verzögerungszeit das Ausgangssignal am ersten Komparatorausgang ständig den ersten Wert hat.

Bei diesen Fehlern ist es jedoch nicht möglich, eine Datenübertragung auch im Augenblick des Auftretens des Fehlers ungestört durchzuführen, sondern es ist eine gewisse Zeitspanne notwendig, um die erforderliche Umschaltung durchzuführen. Eine Übertragung von Datensignalen ohne eine gleichzeitige Übertragung eines Taktsignals muß nämlich in der Weise erfolgen, daß das Taktsignal aus dem Datensignal entnommen werden kann oder bei allen Stationen gegeben ist. Hierfür sind eine Anzahl verschiedener Kodierungen bekannt (z.B. NRZ-Modulation), wo der Ausfall eines normalen Datensignals bereits nach wenigen Takten erkannt werden kann. In diesem Falle kann die erste Verzögerungszeit kurz gewählt werden, so daß eine Umschaltung schnell erfolgen kann. Bei anderen Kodierungen wird dagegen der logische Wert der Datensignale durch ein Dauersignal gebildet, so daß aufeinanderfolgende Daten mit gleichem logischen Wert ein konstantes Signal ohne Signalübergänge bilden, während die Signalübergänge nur zum Synchronisieren eines Taktgenerators auf der Empfängerseite verwendet werden. Durch besondere Kodierungsmaßnahmen wird dafür gesorgt, daß die Anzahl aufeinanderfolgender Daten mit gleichem logischen Wert eine maximale Anzahl nicht überschreitet. In diesem Falle muß die erste Verzögerungszeit größer gewählt werden als die Dauer der maximalen Anzahl aufeinanderfolgender gleicher Daten bei niedrigster Übertragungsfrequenz. Wenn einer der letztgenannten beiden Fehler unmittelbar nach einem Signalübergang bzw. einem Potentialübergang auf den beiden Leitungen erfolgt, sind die danach folgenden übertragenen Daten während der Dauer der ersten Verzögerungszeit praktisch verloren. Dies läßt sich jedoch in den meisten Fällen dadurch ausgleichen, daß ein Datenblock, bei dessen Übertragung die Störung aufgetreten ist, wiederholt übertragen wird, beispielsweise weil der Empfänger den einwandfreien Empfang des Datenblocks nicht bestätigt hat.

Es ist erwünscht, daß die Behebung eines Fehlers während einer Datenübertragung nach Möglichkeit nicht zu einer Störung führt. Ein Verschwinden des Fehlers kann beispielsweise dadurch auftreten, daß eine Verbindung innerhalb einer der Leitungen einen schlechten Kontakt hat oder daß ein Masseschluß bzw. eine Verbindung zwischen beiden Leitungen durch mechanische Erschütterungen wieder verschwindet. Bei den drei erstgenannten Fehlern ist ein Verschwinden des Fehlers ebenso wie dessen Auftreten praktisch ohne Einfluß auf die Datenübertragung selbst, lediglich die Störsicherheit wird nach dem Verschwinden des Fehlers wieder günstiger. Bei den letztgenannten beiden Fehlern führt das Verschwinden des Fehlers dazu, daß der Speicher wieder zurückgeschaltet wird. Um jedoch zu verhindern, daß durch kurze Störsignale auf den Leitungen der Speicher fälschlich zurückschaltet, ist es zweckmäßig, daß in jeder ersten Station der erste Speicher ferner über ein zweites Verzögerungsglied mit einer zweiten Verzögerungszeit mit dem ersten Komparatorausgang derart gekoppelt ist, daß der erste Speicher den Umschalter derart umschaltet, daß der Datenausgang vom zweiten Komparatorausgang auf den ersten Komparatorausgang zurückgeschaltet wird, wenn während einer Zeitdauer entsprechend der zweiten Verzögerungszeit das Ausgangssignal am ersten Komparatorausgang nicht den ersten Wert hat.

Auf diese Weise wird zuverlässig verhindert, daß der erste Speicher fälschlich durch die Störsignale bereits wieder in den Normalzustand zurückgeschaltet wird.

In vielen Fällen sind bei dem eingangs genannten System nicht alle Stationen oder gar keine der Stationen mit einer eigenen Stromversorgung ausgerüstet, sondern es wird parallel zu den beiden Leitungen für die Datenübertragung wenigstens eine weitere Leitung geführt, die eine Versorgungsspannung führt, von der in jeder Station eine niedrigere Betriebsspannung zum Betrieb einer elektrischen Schaltung in der Station zum Ansteuern der ersten und zweiten Leitung abgeleitet ist. In diesem Falle ist es möglich, daß durch einen Fehler die erste oder die zweite Leitung mit der dritten Leitung in Kontakt kommt und das Potential auf der entsprechenden Leitung gleich der Versorgungsspannung wird. Um auch in solchen Fällen eine Datenübertragung über die noch ungestörte Leitung durchführen zu können, ist eine weitere Ausgestaltung der Erfindung dadurch gekennzeichnet, daß in jeder zu den so versorgten Stationen gehörenden ersten Station ein dritter, ein vierter und ein fünfter Komparator vorgesehen sind, von denen der dritte Komparator mit der zweiten Leitung gekoppelt ist, um ein Ausgangssignal mit dem ersten Wert an einem dritten Komparatorausgang zu erzeugen, wenn das Potential auf der zweiten Leitung oberhalb eines dritten Schwellenwerts liegt, der vierte Komparator mit der ersten Leitung und der fünfte Komparator mit der zweiten Leitung gekoppelt ist und jeder dieser beiden Komparatoren ein Ausgangssignal mit einem ersten Wert an einem vierten bzw. fünften Komparatorausgang erzeugt, wenn das Potential auf der mit dem betreffenden Komparator gekoppelten Leitung einen vierten Schwellenwert übersteigt, der zwischen der Betriebsspannung und der Versorgungsspannung liegt, daß ein zweiter und ein dritter Speicher vorgesehen sind, von denen jeder einen ersten und einen zweiten Eingang und einen Ausgang aufweist, wobei der erste Eingang des zweiten Speichers mit dem ersten Komparatorausgang, der zweite Eingang des zweiten Speichers mit dem vierten Komparatorausgang, der erste Eingang des dritten Speichers mit dem fünften Komparatorausgang und der zweite Eingang des dritten Speichers über ein drittes Verzögerungsglied mit einer dritten Verzögerungszeit mit dem fünften Komparatorausgang gekoppelt sind und daß der Ausgang des zweiten Speichers mit dem Umschalter gekoppelt ist, um den dritten Komparatorausgang mit dem Datenausgang zu koppeln, und der Ausgang des dritten Speichers mit dem Umschalter gekoppelt ist, um den zweiten Komparatorausgang mit dem Datenausgang zu koppeln.

Durch den vierten bzw. fünften Komparator kann unmittelbar festgestellt werden, wenn eine der beiden Leitungen einen Kurzschluß mit der höheren Betriebsspannung hat. Bei der ersten Leitung wirkt ein solcher Kurzschluß so, als ob diese Leitung ständig mindestens ein Potential entsprechend dem zweiten logischen Wert eines binären Datensignals hätte, so daß der erste Komparator ständig ein Ausgangssignal mit dem ersten Wert liefert. Deshalb wird der Datenausgang in diesem Falle mit dem dritten Komparatorausgang gekoppelt, der das Signal auf der zweiten Leitung auswertet, die als funktionsfähig angenommen wird. Wenn dagegen die zweite Leitung mit der Versorgungsspannung kurzgeschlossen ist, ist dagegen die Differenz zwischen diesem Potential und dem Potential auf der unbeschädigten ersten Leitung derart negativ, daß der Schwellwert des ersten Komparators niemals überschritten wird und das Signal am ersten Komparatorausgang niemals den ersten Wert annimmt. Daher wird in diesem Falle der Datenausgang mit dem zweiten Komparatorausgang gekoppelt, der das Potential auf der als nicht beschädigt angenommenen ersten Leitung auswertet. Auch hier ist es zweckmäßig, die Eingänge der Speicher über Verzögerungsglieder mit den entsprechenden Komparatorausgängen zu koppeln, um Fehlfunktionen durch kurze Störsignale zu verhindern.

Es ist allgemein nicht ausreichend, wenn trotz eines Fehlers auf einer der beiden Leitungen des differentiellen Busses weiterhin eine Datenübertragung möglich ist, sondern ein solcher Fehler sollte auch nach außerhalb über einen Fehleranzeigeausgang gemeldet werden, damit der Fehler behoben werden kann. Außer bei den ersten drei Fehlern werden bei den übrigen Fehlern Speicher ungeschaltet, deren Ausgangssignale für eine Fehleranzeige verwendet werden können. Für die ersten drei Fehler ist jedoch eine zusätzliche Fehlererkennung notwendig. Hierfür ist eine weitere Ausgestaltung der Erfindung dadurch gekennzeichnet, daß in jeder ersten Station ein erster und ein zweiter Zähler vorgesehen sind, von denen jeder einen Zähleingang, einen Rücksetzeingang und einen Zählerausgang aufweist, wobei der Zähleingang beider Zähler mit dem ersten Komparatorausgang, der Rücksetzeingang des ersten Zählers mit dem zweiten Komparatorausgang, der Rücksetzeingang des zweiten Zählers mit dem dritten Komparatorausgang und der Zählerausgang beider Zähler sowie der Ausgang der Speicherglieder mit dem Fehleranzeigeausgang gekoppelt sind. Die Zähler zählen also jeder eine Anzahl Signalübergänge des ersten Komparatorausgangs, und im fehlerfreien Fall gehört zu jedem solchen Signalübergang auch ein entsprechender Signalübergang am zweiten und am dritten Komparatorausgang, so daß die Zähler nicht über ihre Anfangsstellung hinauszählen können. Wenn jedoch eine der beiden Leitungen gestört ist, fehlen am entsprechenden zweiten oder dritten Komparatorausgang die Signalübergänge, und damit kann der betreffende Zähler einen Fehlerstand erreichen, bei dem ein Fehlersignal erzeugt wird.

Zumindest in solchen Stationen, die nicht nur Daten empfangen, sondern auch senden können, ist jede Leitung über einen zugeordneten Schalter mit dem Potential für den anderen logischen Wert der binären Daten gekoppelt. Außerdem ist eine Ansteuerschaltung vorgesehen, die zum Übertragen dieses anderen logischen Werts der binären Daten im fehlerfreien Fall die beiden Schalter schließt. Wenn in einem Fehlerfall aber z.B. eine der Leitungen mit einer Spannung, die von dem Potential entsprechend dem anderen logischen Wert abweichet, niederohmig verbunden ist, was beim Empfang von Daten festgestellt wird, würde beim anschließenden Senden der zugehörige Schalter einen Kurzschluß zwischen diesem Potential und der Spannung, mit der die Leitung verbunden ist, herstellen. Dabei entsteht eine höhere Verlustleistung am Schalter und eine höhere Belastung der Spannungsquelle, die das System oder mindestens einige Stationen speist. Um dies zu vermeiden, ist die Ansteuerschaltung so aufgebaut, daß sie zumindest in einigen der Fehlerfälle das Schließen des betreffenden Schalters verhindert.

Wie bereits erwähnt, ist jede der beiden Leitungen über je einen Widerstand mit einem anderen Potential bzw. einer anderen Spannung verbunden, die den einen Wert der binären Daten auf den Leitungen definieren. In einem Fehlerfall, bei dem eine Leitung einen Kurzschluß mit der Spannung entsprechend dem anderen Wert der binären Daten oder mit der Versorgungsspannung oder mit der anderen Leitung aufweist. fließt durch den entsprechenden Widerstand bzw. durch beide Widerstände dauernd ein Strom, der eine erhöhte Verlustleistung und eine höhere Belastung der Energieversorgung des Systems bewirkt. Um dies zu vermeiden, ist es zweckmäßig. in Reihe mit beiden Widerständen in jeder Station Schalter vorzusehen, die bei bestimmten Fehlerfällen geöffnet werden. Für die Ansteuerung der Schalter können besonders einfach die Ausgangssignale der Komparatoren bzw. der diesen nachgeschalteten Speicher verwendet werden.

In Systemen mit begrenzter elektrischer Energie, beispielsweise in batteriegespeisten Systemen wie in einem Kraftfahrzeug, ist zweckmäßig ein Bereitschaftszustand der Station vorgesehen, in dem die Stromaufnahme stark reduziert ist, beispielsweise durch Abschalten des größten Teils der Schaltung in jeder Station. Die Leitungen müssen aber auch in diesem Zustand die gleichen Potantiale haben wie im aktiven Zustand, damit eine Station durch eine Potentialänderung auf den Leitungen in den aktiven Zustand versetzt werden kann, d.h., daß die Leitungen weiterhin über die Widerstände mit den entsprechenden Potentialen verbunden sein müssen. Hier wäre eine erhöhte Verlustleistung im Fehlerfall ein noch größere Problem, so daß bei bestimmten Fehlern unbedingt der entsprechende Widerstand abgeschaltet werden muß. Zu diesem Zweck werden wenigstens zwei weitere Komparatoren eingesetzt, die im Bereitschaftszustand aktiv sind und die die Schalter in Reihe mit den Widerständen steuern.

Ausführungsbeispiele der Erfindung werden anhand der Zeichnung näher erläutert. Es zeigen:
- Fig. 1: schematisch ein System mit mehreren Stationen und deren Leitungsverbindugen,
- Fig. 2: ein Blockschaltbild der wichtigsten Teile einer Station,
- Fig. 3: ein Blockschaltbild einer der beiden Fehlererkennungsschaltungen,
- Fig. 4: ein Blockschaltbild der weiteren Fehlererkennungsschaltung,
- Fig. 5: die Steuerung des Datenausgangs und der Abschlußwiderstände,
- Fig. 6: die Schaltung einer Station für einen Bereitschaftszustand,
- Fig. 7: eine weitere Fehlererkennungsschaltung für den Bereitschaftszustand.

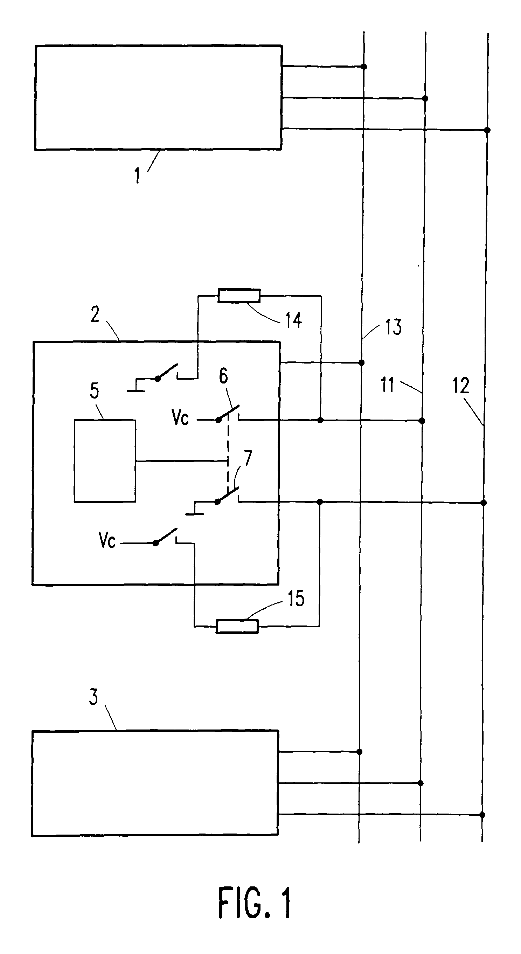

In Fig. 1 sind drei Stationen 1, 2 und 3 schematisch dargestellt, die über drei Leitungen 11, 12 und 13 miteinander verbunden sind. Die Leitung 13 ist hier mit einer höheren Versorgungsspannung verbunden, von denen die einzelnen Stationen die Betriebsspannung für die darin enthaltene elektronische Schaltung ableiten. Die Leitungen 11 und 12 bilden den differentiellen Bus, über den die Daten übertragen werden.

Bei der Station 2 sind weitere Einzelheiten dargestellt, die der Übersichtlichkeit halber bei den Stationen 1 und 3 weggelassen sind. Die Leitung 11 ist über einen Widerstand 14 und über einen Schalter mit Masse verbunden. Entsprechend ist die Leitung 12 über einen Widerstand 15 und einen weiteren Schalter mit der Betriebsspannung Vc verbunden, die in der Station von der Versorgungsspannung auf der Leitung 13 abgeleitet ist. Die Funktion der beiden Schalter, die normalerweise geschlossen sind, wird später erläutert. Ferner ist in der Station 2 eine Steueranordnung 5 vorgesehen, die zwei Schalter 6 und 7 gemeinsam ansteuert, wobei der Schalter 6 die Leitung 11 mit der Betriebsspannung Vc und der Schalter 7 die Leitung 12 mit Masse verbindet. Wenn die Schalter 6 und 7 offen sind, liegt die Leitung 11 über den Widerstand 14 auf einem niedrigen Potential und die Leitung 12 über den Widerstand 15 auf der Betriebsspannung Vc. Dies entspricht gleichzeitig dem einen logischen Wert der zu übertragenden binären Datensignale. Wenn der andere logische Wert übertragen werden soll, werden von der Steuereinheit 5 beide Schalter 6 und 7 geschlossen, so daß die Leitung 11 nun ein hohes Potential und die Leitung 12 ein niedriges Potential hat. Auf diese Weise können von jeder der Stationen 1 bis 3 Daten über die Leitungen 11 und 12 übertragen werden. Der Zustand bzw. die Potentiale auf den Leitungen 11 und 12 bei offenen Schaltern 6 und 7 werden im folgenden daher als rezessiv und der Zustand bei geschlossenen Schaltern 6 und 7 wird als dominant bezeichnet.

Es sei bemerkt, daß die Leitungen 11 und 12 anstelle mit Masse bzw. mit der Betriebsspannung Vc auch mit einer Spannung etwas höher als Masse bzw. etwas niedriger als Vc über die Schalter verbunden werden können, solange der Unterschied zwischen beiden Spannungen groß genug ist.

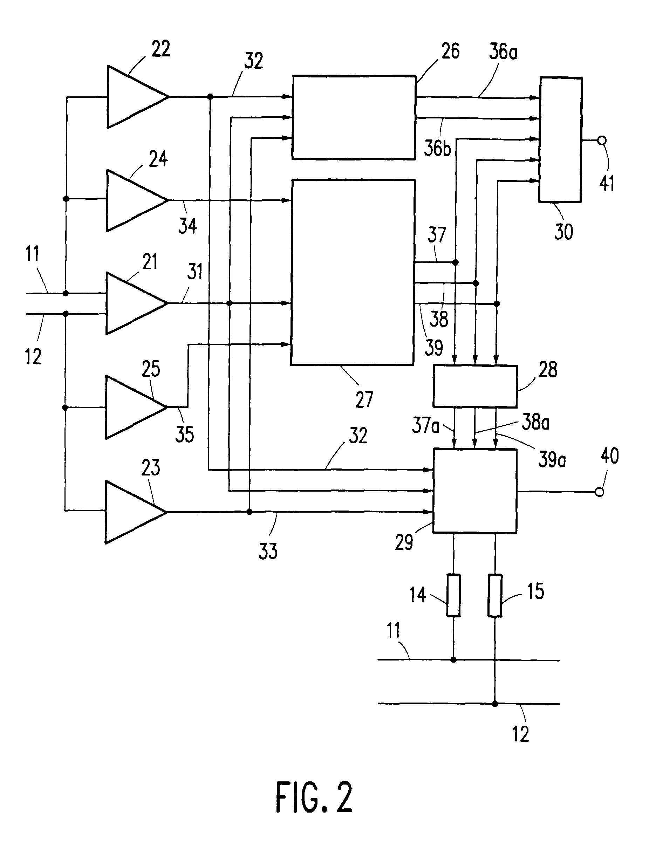

Die Schaltung zur Auswertung der über die Leitungen 11 und 12 übertragenen Daten in einer Station ist in Fig. 2 dargestellt. Die beiden Leitungen 11 und 12 führen auf einen ersten Komparator 21, der die Differenz zwischen den Potentialen auf den Leitungen 11 und 12 bildet, genauer gesagt, das Potential auf der Leitung 12 von dem der Leitung 11 subtrahiert, und der die vorzeichenrichtige Differenz mit einem ersten Schwellwert vergleicht. Dieser Schwellwert ist derart gewählt, daß nur bei dem rezessiven Zustand beider Leitungen 11 und 12 ein niedriges Ausgangssignal auf der Leitung 31 erzeugt wird. Die Leitung 31 ist mit einem Multiplexer 29 verbunden, der die Leitung 31 im fehlerfreien Fall und bei bestimmten Fehlern zum Datenausgang 40 durchschaltet. Ferner führt die Leitung 31 auf zwei Fehlererkennungsschaltungen 26 und 27, die später erläutert werden.

Die Leitung 11 führt außerdem auf einen Komparator 22, der das Potential auf dieser Leitung mit einem Schwellenwert vergleicht, der zwischen dem dominaten und dem rezessiven Potential auf der Leitung 11 unter Berücksichtigung von Toleranzen liegt. Der Komparator 22 erzeugt auf der Leitung 32 ein hohes Signal, wenn das Potential auf der Leitung 11 über dem Schwellenwert liegt. Diese Leitung 32 führt auf die Fehlererkennungsschaltung 26 sowie auf die Schaltung 29, die diese Leitung bei bestimmten Fehlern mit dem Datenausgang 40 verbindet.

Ferner führt die Leitung 11 auf einen weiteren Komparator 24, der das Potential auf dieser Leitung mit einer Spannung zwischen der Betriebsspannung der Schaltung und der höheren Versorgungsspannung auf der Leitung 13 in Fig. 1 vergleicht und ein Signal auf der Leitung 34 erzeugt, wenn das Potential auf der Leitung 11 höher ist als die Betriebsspannung. Diese Leitung 34 führt auf die untere Fehlererkennungsschaltung 27.

Entsprechend führt die Leitung 12 auch auf einen Komparator 23, der das Potential auf dieser Leitung mit einem Schwellenwert vergleicht, der ebenfalls zwischen dem dominanten und rezessiven Potential liegt. Der Komparator 23 erzeugt ein hohes Signal auf der Leitung 33, wenn das Potential auf der Leitung 12 unter dem Schwellwert liegt. Die Leitung 33 ist und der oberen Fehlererkennungsschaltung 26 und mit der Schaltung 29 verbunden, die diese Leitung bei einem bestimmten Fehler, wie später erläutert wird, mit dem Datenausgang verbindet.

Ferner führt die Leitung 12 auf einen Komparator 25, der das Potential auf dieser Leitung mit einem Schwellenwert zwischen der Betriebsspannung und der höheren Versorgungsspannung vergleicht, und zwar in gleicher Weise, wie dies beim Komparator 24 mit dem Potential auf der Leitung 11 erfolgt. Die Ausgangsleitung des Komparators 25 ist ebenfalls mit der unteren Fehlererkennungsschaltung 27 verbunden. Für den Fall, daß auf der Leitung 13 nicht eine höhere Versorgungsspannung, sondern direkt die Betriebsspannung den einzelnen Stationen zugeführt wird, wirkt ein Kurzschluß zwischen der Leitung 12 und der Betriebsspannung wie eine Unterbrechung der Leitung 12 und kann auch so behandelt werden.

Die obere Fehlererkennungsschaltung 26 erzeugt ein Fehlersignal auf einer Ausgangsleitung 36a, wenn die Leitung 11 unterbrochen ist oder einen Kurzschluß nach Masse hat. Auf der Leitung 36b wird ein Fehlersignal erzeugt, wenn die Leitung 12 unterbrochen ist.

Die untere Fehlererkennungsschaltung 27 erzeugt auf einer Ausgangsleitung 37 ein Signal, wenn die beiden Leitungen 11 und 12 miteinander Kurzschluß haben oder wenn die Leitung 12 einen Kurzschluß gegen Masse oder wenn die Leitung 11 einen Kurzschluß mit der Vorgungsspannung hat. In diesem Fall wird auch auf der Leitung 38 ein Fehlersignal erzeugt. Auf der Leitung 39 wird ein Fehlersignal erzeugt, wenn die Leitung 12 einen Kurzschluß mit der Versorgungsspannung hat.

Alle Fehlersignale auf den Leitungen 36a, 36b und 37 bis 39 werden über ein Verknüpfungsglied 30 zusammengefaßt und an einem Fehleranzeigeausgang 41 ausgegeben.

Die Leitungen 37 bis 39 führen außerdem auf eine Prioritätschaltung 28, da bei bestimmten Fehlern mehr als eine Leitung ein hohes Signal führt, jedoch eindeutige Ansteuersignale für die Schaltung 29 benötigt werden. Dabei hat die Leitung 38 die höchste Priorität, die Leitung 39 die zweithöchste und die Leitung 37 die niedrigste Priorität. Der Aufbau einer solchen Prioritätsschaltung 28 ist allgemein bekannt. Die Signale auf den Leitungen 37 bis 39 werden entsprechend ihrer Priorität auf den Leitungen 37a bis 39a angegeben.

In der Schaltung 29 sind ferner Schalter vorhanden, wie in Fig. 1 in der Station 2 angedeutet, die den mit der Leitung 11 verbundenen Widerstand 14 mit Masse und den mit der Leitung 12 verbundenen Widerstand 15 mit der Betriebsspannung Vc verbinden.

Die Signale der Leitungen 37a bis 39a können ferner dazu benutzt werden, die Ansteuerung der Schalter 6 oder 7 in Fig. 1 zu blockieren. Wenn beispielsweise die Leitung 11 oder die Leitung 12 einen Kurzschluß mit der Versorgungsspannung auf der Leitung 13 hat, würden die Schalter 6 oder 7 bei Ansteuerung eine Verbindung zwischen der Versorgungsspannung und Masse bzw. Betriebsspannung herstellen. Je nach dem Verhältnis von Kurzschlußwiderstand und Einschaltwiderstand des Schalters entsteht an diesem eine hohe Verlustleistung. Ein Signal auf der Leitung 38a (Kurzschluß der Leitung 11 mit Versorgungsspannung) blockiert daher die Ansteuerung des Schalters 6. Entsprechend blockiert ein Signal auf der Leitung 37a (Leitung 12 hat Kurzschluß mit Leitung 11) oder auf der Leitung 39a (Leitung 12 hat Kurzschluß mit der Versorgungsspannung) die Ansteuerung des Schalters 7. Ein Signal auf der Leitung 37a tritt zwar auch in dem für den Schalter 7 unkritischen Fall auf, daß die Leitung 12 Kurzschluß mit Masse hat, jedoch ist die Blockierung der Ansteuerung des Schalters 7 in diesem Fall nicht nachteilig. Andererseits tritt beim Kurzschluß der Leitung 11 mit Masse, was ein Signal auf der Leitung 36a erzeugt, eine höhere Verlustleistung am Schalter 6 auf, so daß dieser bei diesem Fehler auch abgeschaltet werden sollte. Das Signal auf der Leitung 36a tritt aber auch bei einer Unterbrechung der Leitung 11 auf, wobei der Schalter 6 dann weiter angesteuert werden sollte, damit eine Aufhebung dieses Fehlers gleich erkannt wird. Wenn diese beiden Fehler der Leitung 11 nicht unterschieden werden, wofür zusätzlicher Aufwand erforderlich ist, sollte die Ansteuerung des Schalters 6 beim Kurzschluß der Leitung 11 mit Masse nicht blockiert werden.

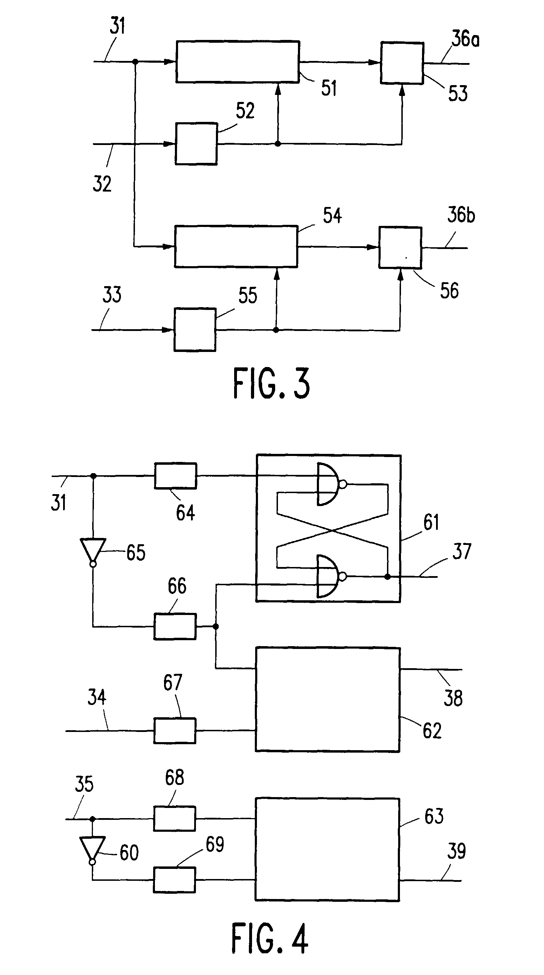

In Fig. 3 ist der Aufbau der Fehlererkennungsschaltung 26 in Fig. 2 etwas ausführlicher dargestellt. Darin sind zwei Zähler 51 und 54, zwei Differenzierschaltungen 52 und 55 sowie zwei Zählspeicher 53 und 56 vorhanden. Die Zähleingänge der Zähler 51 und 54 sind gemeinsam mit der Leitung 31 verbunden. Der Eingang des Differenzierers 52 ist mit der Leitung 32 verbunden, und der Differenzierer 52 gibt ein kurzes Ausgangssignal ab, wenn auf der Leitung 32 eine Signalflanke durch den Übergang des Signals auf der Leitung 11 auftritt, und das Signal des Differenzierers 52 setzt den Zähler 51 auf eine Anfangsstellung zurück und setzt außerdem den Zählspeicher 53 in seine Ruhelage. Die Differenzierschaltung 55 empfängt das Signal aus der Leitung 33 und erzeugt ebenfalls aus dem Signalübergang auf der Leitung 33 beim Übergang der Leitung 12 ein kurzes Ausgangssignal, daß den Zähler 54 in eine Anfangsstellung und den Zählspeicher 56 in die Ruhestellung setzt.

Wenn die Leitung 11 oder 12 unterbrochen ist, treten auf der Leitung 31 noch Signalübergänge auf, die von beiden Zählern 51 und 54 gezählt werden, jedoch abhängig von der unterbrochenen Leitung tritt auf der Leitung 32 oder 33 kein entsprechender Signalübergang auf, so daß der zugehörige Zähler 51 oder 54 nicht zurückgesetzt wird, sondern eine Zählstellung erreicht, bei der der Zählerspeicher 53 bzw. 56 gesetzt wird. Damit wird auf der entsprechenden Leitung 36a bzw. 36b ein Fehlersignal erzeugt. Statt der Verwendung der Zählerspeicher 53 und 56 kann auch das Weiterzählen der Zähler blockiert werden, wenn sie die entsprechende Zählerstellung erreicht haben. Wenn der Fehler verschwindet oder beseitigt ist, wird automatisch ein gesetzter Zählerspeicher bzw. ein blockierter Zähler zurückgesetzt, weil dann wieder Signalflanken auf beiden Leitungen 32 und 33 auftreten.

Der Aufbau der Fehlererkennungsschaltung 27 in Fig. 2 ist in Fig. 4 näher dargestellt. Diese enthält drei Speicher 61,62 und 63, von denen jeder aus zwei kreuzgekoppelten NOR-Gattern aufgebaut ist, wobei die weiteren Eingänge der NOR-Gatter die Eingänge des Speichers bilden. Der Übersichtlichkeit ist dieser Aufbau nur bei dem Speicher 61 dargestellt. Es können auch andere sogenannte R-S-Flipflops verwendet werden.

Von dem Speicher 61 ist der obere Eingang über ein erstes Verzögerungsglied 64 mit der Leitung 31 verbunden. Sobald die Leitung 31 ein hohes Signal während eines durchgehenden Zeitraums führt, der größer ist als die Verzögerungszeit des ersten Verzögerungsgliedes, wird der Ausgang des Verzögerungsgliedes 64 hoch, und auf der Ausgangsleitung 37 wird ein hohes Signal erzeugt. Dieses dauernde hohe Signal auf der Leitung 31 tritt auf, wenn durch einen Fehler eine der beiden Leitungen dauernd einen dominanten Zustand hat oder wenn die Leitungen abwechselnd einen dominanten Zustand haben. Dies ist der Fall, wenn beide Leitungen miteinander Kurzschluß haben, denn dann haben zu keiner Zeit beide Leitungen gleichzeitig einen rezessiven Zustand, und das Signal auf der Leitung 31 wird nicht niedrig. Die Verzögerungszeit des Verzögerungsgliedes 64 muß also größer sein als die Zeitdauer, die eine maximale Anzahl von übertragenen Daten mit gleichem Wert haben kann.

Wenn ein derartiger Fehler behoben ist und das Signal auf der Leitung 31 bei einem rezessiven Zustand auf beiden Leitungen 11 und 12 auftritt, wird über einen Inverter 65 und ein weiteres Verzögerungsglied 66, das mit dem unteren Eingang des Speichers 61 verbunden ist, dieser wieder zurückgesetzt und das Signal auf der Leitung 37 auf einen niedrigen Wert gebracht. Das Verzögerungsglied 66 soll verhindern, daß durch kurzzeitige Störsignale im Fehlerfall der Speicher 61 fälschlich zurückgesetzt wird.

Von dem Speicher 62 ist der eine Eingang über ein Verzögerungsglied 67 mit der Leitung 34 und der andere Eingang mit dem Verzögerungsglied 66 verbunden. Beide Verzögerungsglieder haben vorzugsweise etwa gleiche Verzögerungszeit. Sobald die Leitung 11 einen Kurzschluß gegen die Versorgungsspannung hat, erscheint auf der Leitung 34 ein hohes Signal, und wenn dieses Signal länger als die Verzögerungszeit des Verzögerungsgliedes 67 ansteht, wird der Speicher 62 gesetzt und ein hohes Signal auf der Leitung 38 erzeugt. Dieser Zustand ist im übrigen der dominante Zustand für die Leitung 11, und während dieser besteht, werden auf der Leitung 31 auch keine Signalübergänge erzeugt, so daß der Speicher 62 gesetzt bleibt. Erst wenn der Fehler behoben ist und wieder Signale auf der Leitung 31 erscheinen, wird der Speicher 62 zurückgesetzt, so daß dann das Signal auf der Leitung 38 wieder niedrig wird. Stattdessen kann das Rücksetzen des Speichers 62 auch über einen nicht dargestellten Inverter von dem Signal auf der Leitung 34 erfolgen.

Der eine Eingang des Speichers 63 ist über ein Verzögerungsglied 68 mit der Leitung 35 verbunden, die ein hohes Signal führt, wenn die Leitung 12 einen Kurzschluß mit der Versorgungsspannung hat. Wenn dieser Kurzschluß länger als die Verzögerungszeit des Verzögerungsglieds 68 dauert, die im übrigen zweckmäßig etwa gleich der Verzögerungszeit der Verzögerungsglieder 67 und 66 gewählt ist, wird der Speicher 63 gesetzt, und auf der Leitung 39 erscheint ein hohes Signal.

Der andere Eingang des Speichers 63 ist über ein weiteres Verzögerungsglied 69 und einen Inverter 60 mit der Leitung 35 verbunden. Die Verzögerungszeit des Verzögerungsglieds 69 ist wesentlich größer und hängt von Bedingungen während eines Bereitschaftszustands des gesamten Systems ab, der später erläutert wird. In diesem Bereitschaftszustand tritt im übrigen auch ohne Fehlerfall ein Potential oberhalb der Betriebsspannung auf der Leitung 12 auf, so daß der Speicher 63 im Bereitschaftszustand stets gesetzt wird. In diesem Zustand findet jedoch keine Datenübertragung statt, und ein Fehlersignal wird auch nicht ausgewertet.

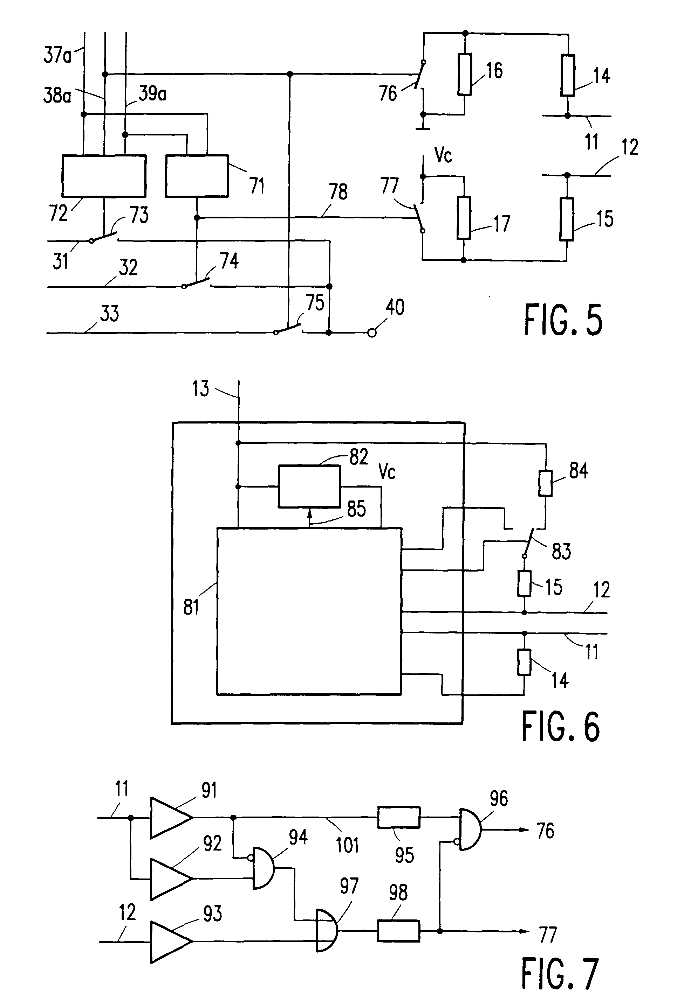

Der Aufbau der Schaltung 29 in Fig. 2 ist in Fig. 5 näher dargestellt. Die Leitung 37a, die ein Signal führt, wenn die Leitung 12 einen Kurzschluß mit Masse oder mit der Leitung 11 hat, wie früher beschrieben wurde, führt auf einen Eingang eines ODER-Gatters 71 und eines ODER-Gatters 72. Das Ausgangssignal des ODER-Gatters 72 auf der Leitung 79 öffnet den Schalter 73 und unterbricht damit die Verbindung von der Leitung 31 zum Datenausgang 40, so daß das Signal am Datenausgang 40 nun nicht mehr von dem Komparator 21 in Fig. 2 abgeleitet wird. Das ODER-Gatter 71 erzeugt auf der Leitung 78 ein Signal, das den Schalter 74 schließt, so daß nun die Leitung 32 mit dem Datenausgang 40 verbunden ist und das Signal am Datenausgang somit vom Komparator 22 in Fig. 2 abgeleitet wird. Außerdem öffnet das Signal auf der Leitung 78 einen Schalter 77, der die Leitung 12 über den Widerstand 15 mit der Betriebsspannung Vc verbindet. Dadurch wird verhindert. daß, wenn die Leitung 12 einen Kurzschluß gegen Masse aufweist, ständig ein Strom von der Betriebsspannung über den Widerstand 15 abfließt, oder wenn die Leitung 12 Kurzschluß mit der Leitung 11 hat, daß das rezessive Potential auf beiden Leitungen zu sehr angehoben wird. Es bleibt lediglich eine Verbindung von der Leitung 12 über den Widerstand 15 und einen sehr hochohmigen Widerstand 17 zur Betriebsspannung Vc bestehen, um zu erreichen, daß nach Beendigung des Fehlers die Leitung 12 kein undefiniertes Potential annimmt.

Die Leitung 38a, die ein Signal führt, wenn die Leitung 11 einen Kurzschluß mit der höheren Versorgungsspannung hat, führt ebenfalls auf einen Eingang des ODER-Gatters 72, so daß auch in diesem Falle die Verbindung zwischen der Leitung 31 und dem Datenausgang 40 unterbrochen wird. Außerdem steuert das Signal auf der Leitung 38a einen Schalter 75 an, der nun die Leitung 33 mit dem Datenausgang 40 verbindet, und ferner wird ein Schalter 76 geöffnet, so daß die Leitung 11 über den Widerstand 14 nicht mehr mit Masse verbunden ist und somit ein unnötiger Strom durch den Widerstand 14 vermieden wird. Die Leitung 11 ist nur noch über die Reihenschaltung des Widerstands 14 und eines sehr hochohmigen Widerstandes 16 mit Masse verbunden, aus den gleichen Gründen, wie für die Leitung 12 und die Reihenschaltung der Widerstände 15 und 17 beschrieben wurde. Wenn der Kurzschluß der Leitung 11 mit der Versorgungsspannung nicht sehr niederohmig ist und durch die zunächst mit Masse verbundenen Widerstände 16 in allen mit der Leitung 11 verbundenen Stationen eine Spannungsteilung derart auftritt, daß durch die Toleranzen der Schwellspannungen der Komparatoren 24 in den Stationen nur einer dieser Komparatoren umschaltet und den Widerstand 16 abschaltet, ändert sich die Spannungsteilung derart, daß die Spannung auf der Leitung 11 höher wird. Dadurch wird in wenigstens einer weiteren Station der Komparator 24 ansprechen und den Widerstand 16 in dieser Station abschalten usw., bis alle Stationen den gleichen Zustand mit abgeschaltetem Widerstand 16 haben. Der umgekehrte Effekt tritt auf, wenn der Kurzschluß zwischen Leitung 11 und Versorgungsspannung einen höheren Widerstand annimmt, so daß in wenigstens einer Station der Komparator 24 in entgegengesetzter Richtung anspricht. Auch dann nehmen nacheinander alle Stationen denselben Zustand ein. In beiden Fällen wird durch den beschriebenen Effekt eine Art Hysterese wirksam.

Die Leitung 39a, die ein Signal führt, wenn die Leitung 12 einen Kurzschluß mit der höheren Versorgungsspannung hat, ist mit einem Eingang der ODER-Gatter 71 und 72 verbunden, also in gleicher Weise wie die Leitung 37a, d.h. die Schalter 73 und 77 werden geöffnet und der Schalter 74 wird geschlossen und damit die Leitung 32 mit dem Datenausgang 40 verbunden.

Es sei darauf hingewiesen, daß die Zustände auf den Leitungen 11 und 12 nicht nur von den Widerständen 14 und 15 dieser Station, sondern von den entsprechenden Widerständen der anderen Stationen bestimmt werden.

Manchmal wird ein System der beschriebenen Art in einer Umgebung eingesetzt, bei der die Quelle, die die höhere Versorgungsspannung liefert, nur eine begrenzte Energie enthält. Dies ist besonders der Fall, wenn das beschriebene System in einem Kraftfahrzeug eingesetzt wird. Daher wird für ein derartiges System neben dem normalen Übertragungsmodus auch ein Bereitschaftszustand vorgesehen, in dem ein korrekter Empfang von Daten und das Senden von Daten zwar nicht möglich ist, aber die von anderen Stationen übertragenen Daten bei Erfüllung gewisser Kriterien als Anforderung zum Wechsel in den normalen Übertragungsmodus verstanden werden können. Dieser Wechsel wird auch als Wecken bezeichnet. Eine Station kann also, beispielsweise wenn während einer vorgegebenen Zeitspanne keine Daten übertragen worden sind, in einen Betriebszustand mit sehr geringem Stromverbrauch, nämlich den Bereitschaftszustand versetzt werden, jedoch über die Übertragungsleitungen gesteuert jederzeit wieder in den normalen Übertragungszustand zurückversetzt werden. Die Stromaufnahme im Bereitschaftszustand soll möglichst gering sein, da der gesamte Energieverbrauch mit der Anzahl der Stationen in einem System proportional ansteigt.

Der Anforderung nach möglichst geringer Stromaufnahme im Bereitschaftszustand steht allerdings entgegen, daß in jeder Station aus der höheren Versorgungsspannung, im Falle eines Kraftfahrzeugs aus der Batterie, die Betriebsspannung für die elektronische Schaltung abgeleitet wird, denn eine dafür notwendige Spannungsstabilisierungsschaltung benötigt ebenso wie die weitere Schaltung in jeder Station einen Mindeststrom, der größer ist als der gewünschte Strom im Bereitschaftszustand. Daher wird im Bereitschaftszustand die Spannungsstabilisierungsschaltung ganz abgeschaltet, so daß auch keine Betriebsspannung mehr vorhanden ist. Damit wird die Leitung 12 im Bereitschaftszustand nicht mehr über den Widerstand 15 in jeder Station auf das rezessive hohe Potential gebracht. Dies würde zwar in den übrigen abgeschalteten Stationen nicht zu Störungen führen, jedoch wäre es dann nicht mehr möglich, daß eine Station, die beispielsweise durch eine lokale Bedingung wie ein Schalter in den normalen Übertragungszustand gebracht worden ist, durch eine Ansteuerung beider Leitungen des Busses alle anderen Stationen weckt. Die Bedingung, daß zum Wecken der anderen Stationen beide Leitungen angesteuert werden müssen, beruht darauf, daß bei einem Fehler in einer Leitung es möglich sein soll, alle anderen Stationen dennoch zu wecken.

Eine Schaltung, die auch unter diesen Bedingungen eine einwandfreie Funktion ermöglicht, ist in Fig. 6 dargestellt. Diese zeigt eine Station, die über die Leitung 13 eine Versorgungsspannung erhält. In der Station ist eine Steuereinheit 81 vorgesehen, die nicht nur das Senden und das Empfangen von Daten über die Leitungen 11 und 12 durchführt, sondern außerdem auch die Einstellung in den Bereitschaftszustand bzw. den Übertragungszustand. Die Leitung 13 führt auf eine Spannungsregelschaltung 82, die daraus eine stabilisierte Betriebsspannung Vc ableitet, die der Steuereinheit 81 zugeführt wird. Die Spannungsregelschaltung 82 ist außerdem über die Leitung 85 abschaltbar, um die Station in den Bereitschaftszustand zu versetzen, wobei dann die Betriebsspannung Vc praktisch verschwindet. Da im Bereitschaftszustand die Verarbeitung einer Datenübertragung über die Leitungen 11 und 12 wirksam sein muß, wird für diesen Teil der Schaltung, der nur sehr wenig Strom benötigt, die Leitung 13 auch direkt der Steuereinheit 81 zugeführt.

Damit im Bereitschaftszustand aller Stationen der Beginn einer Datenübertragung für eine aufgeweckte Station beginnen kann, muß dafür gesorgt sein, daß auch im Bereitschaftszustand auf der Leitung 12 ein rezessives hohes Potential vorhanden ist. Dies ist nicht mehr ohne weiteres über den Widerstand 15 möglich, wenn im Bereitschaftszustand die Spannung Vc fehlt. Die Leitung 13 mit der höheren Versorgungsspannung wird dafür über einen Widerstand 84 auf einen Schalter 83 geführt, der von der Steuereinheit 81 im Bereitschaftszustand die beiden Widerstände 84 und 15 in Reihe schaltet und damit auf der Leitung 12 ein Potential mit etwa der Versorgungsspannung auf der Leitung 13 erzeugt. Diese Spannung ist zwar höher als im normalen Übertragungszustand, jedoch ist im Bereitschaftszustand eine Datenübertragung nicht vorgesehen. Der Speicher 63 in Fig. 4 wird im Bereitschaftszustand nicht gesetzt, da die Betriebsspannung fehlt.

Eine Station, die durch eine lokale Bedingung geweckt wird und nun eine Übertragung beginnt, schaltet zunächst den Schalter 83 wieder um, so daß die Leitung 12 in dieser Station über den Widerstand 15 mit der dann ebenfalls eingeschalteten Betriebsspannng Vc verbunden ist. Da jedoch in den übrigen Stationen die Leitung 12 noch über den Widerstand 84 mit der höheren Versorgungsspannung verbunden sind, stellt sich auf der Leitung 12 zunächst ein höheres Potential als in dem normalen Übertragungszustand ein, wodurch in den zunächst aufgeweckten Stationen der Speicher 63 in Fig. 4 gesetzt wird. Sobald jedoch schließlich die Leitung 1 genügend lange auf dem dem normalen Übertragungszustand entsprechendes Potential liegt, wobei diese Zeit der Verzögerungszeit der Verzögerungsglieder 69 in den einzelnen Stationen entspricht, werden alle Speicher 63 schließlich wieder zurückgeschaltet. Da auch bei gesetztem Speicher 63 eine normale Datenübertragung möglich ist, entstehen dadurch keine Störungen.

Nun können aber auch während des Bereitschaftszustandes aller Stationen Fehler auf den Leitungen 11 und 12 auftreten bzw. vorhanden sein, die jedoch nicht zu einer erhöhten Stromaufnahme führen dürfen. Um dies zu verhindern, wird eine während des Bereitschaftszustandes wirksame Fehlererkennungsschaltung vorgesehen, die in Fig. 7 dargestellt ist. Darin führt die Leitung 11 auf zwei Komparatoren 91 und 92, die das Potential auf der Leitung 11 mit verschiedenen Schwellenwerten vergleichen. Der Komparator 91 prüft, ob das Potential auf der Leitung 11 über einen Wert steigt, der etwas unterhalb der Versorgungsspannung auf der Leitung 13 liegt. Dies ist der Fall, wenn die Leitung 11 einen Kurzschluß mit der Versorgungsspanung hat. Das in diesem Falle auf der Leitung 101 erzeugte Signal wird über ein Verzögerungsglied 95 einem Eingang eines UND-Gatters 96 zugeführt. Dessen Ausgang führt auf den Schalter 76 in Fig. 5 und trennt den Widerstand 14 von Masse, so daß in diesem Fehlerfall kein Strom von der Versorgungsspannung über den Widerstand 14 bzw. die Widerstände 14 in allen Stationen fließen kann, da alle Stationen den gleichen Fehler feststellen und den Widerstand 14 von Masse trennen.

Im rezessiven Zustand hat die Leitung 12 hohes Potential, wie vorher beschrieben wurde. Wenn diese Leitung jedoch einen Kurzschluß nach Masse aufweist, würde in jeder Station über die Widerstände 15 und 84 ein Strom von der Versorgungsspannung über den Widerstand 15 gegen Masse fließen. Der Komparator 93 vergleicht nun das Potential auf der Leitung 12 mit einem Schwellwert zwischen dem dominanten und dem rezessiven Potential und gibt ein Signal ab, wenn dieses Potential unterschritten wird. Dieses Signal führt über das ODER-Gatter 97 und ein Verzögerungsglied 98 auf den Schalter 77 in Fig. 5, so daß der Widerstand 15 nicht mehr mit dem Widerstand 84 in Fig. 6 verbunden ist und somit auch kein Strom von der Versorgungsspannung gegen Masse fließen kann.

Wenn die beiden Leitungen 11 und 12 einen Kurzschluß untereinander aufweisen, haben sie ein gemeinsames Potential. der insbesondere abhängig davon, wieviele Stationen bereits auf diesen Fehler reagiert haben, zwischen Masse und einer Spannung unterhalb der Versorgungsspannung liegen kann. Um dies festzustellen, ist der Komparator 92 vorgesehen, der das Potential auf der Leitung 11 mit einem Schwellenwert vergleicht, der ebenfalls zwischen dem dominanten und dem rezessiven Potential liegt, jedoch kleiner ist als der Schwellenwert des Komparators 93. Dadurch wird erreicht, daß bei einem Kurzschluß zwischen den beiden Leitungen 11 und 12 wenigstens einerder beiden Komparatoren 92 oder 93 ein Signal abgibt. Das Signal des Komparators 92 wird einem UND-Gatter 94 zugeführt, von dem ein Sperreingang mit dem Ausgang des Komparators 91 verbunden ist, da der Komparator 92 auch ein Ausgangssignal liefert, wenn die Leitung 11 einen Kurzschluß mit der Versorgungsspannung hat, wobei dann das Ausgangssignal des Komparators 92 nicht wirksam sein soll. Wenn also lediglich die Leitungen 11 und 12 untereinander Kurzschluß aufweisen, ist das UND-Gatter 94 freigegeben, und die Ausgangssignale beider Komparatoren 92 und 93 werden im ODER-Gatter zusammengefaßt und führen über das Verzögerungsglied 98 zum Schalter 77 in Fig. 5. Außerdem führt das Ausgangssignal des Verzögerungsglieds 98 auch auf einen Sperreingang des UND-Gatters 96, um zu verhindern, daß beide Widerstände 14 und 15 abgeschaltet werden. Dieser Fall kann jedoch lediglich bei einem mehrfachen Fehler auftreten, so daß diese Verbindung zum UND-Gatter 96 und dieses selbst auch weggelassen werden können.

Die Funktion der bisher beschriebenen Schaltungen wird nachfolgend erläutert.

### Anforderung

Es sollen folgende Fehlerzustände berücksichtigt werden:
1. Unterbrochene Leitung 11
2. Unterbrochene Leitunn 12
3. Kurzschluß Leitung 11 nach Vbat (Versorgungsspannung)
4. Kurzschluß Leitung 12 nach Masse
5. Kurzschluß Leitung 11 nach Masse
6. Kurzschluß Leitung 12 nach Vbat
7. Kurzschluß Leitung 11 nach Leitung 12

Diese Fehler sollen erkannt werden, und es soll dennoch eine Datenübertragung möglich sein. Fehler 1 und 2 dürfen beim Eintreffen oder Aufheben zu keinem Fehler im empfangenen Datenstrom führen. Bei Fehlern 3 bis 7 sind Datenfehler während des Auftretens oder der Aufhebung des Leitungsfehlers vorübergehend erlaubt, danach muß die Datenübertragung wieder gewährleistet sein. Erhöhte Ströme und damit verbunden erhöhte Temperaturen sollen außerdem vermieden werden.

Im Bereitschaftszustand liegt die Leitung 12 auf Vbat-Potential. Dabei ergeben sich unter Umständen andere Fehlersituationen. Die Fehler, die zu erhöhten Strömen führen können, sind im Bereitschaftszustand die Fehler 3, 4 und 7.

### Signalzustände

Die Datenübertragung erfolgt mit zwei verschiedenen Signalpotentialen. Im rezessiven Zustand ist kein Schalter 6 bzw. 7 in irgendeiner Station geschlossen, und damit treten folgende Signalpotentiale auf:
- Leitung 11:: Masse + ΔU (0...0,25V),
- Leitung 12:: Vc - ΔU (4,5...5,25V) im Betriebszustand und Vbat - ΔU (6...27V) im Bereitschaftszustand

Im dominanten Zustand sind in mindestens einer Station die mit den Leitungen verbundenen Schalter 6 und 7 geschlossen, wodurch folgende Signalpotentiale auftreten:
- Leitung 11:: Vc - ΔU1 (min. 3,35V; typ. 4V)
- Leitung 12:: Masse + ΔU1 (max. 1,4V; typ. 1V).

Dabei bedeutet ΔU1 die Spannung, die an dem geschlossenen Schalter 6 bzw. 7 durch den Strom durch die Abschlußwiderstände abfällt. Der Abschluß der beiden Leitungen erfolgt verteilt an allen Stationen im System. Der Ersatzwiderstand aller Abschlußwiderstände ergibt etwa die Leitungsimpedanz.

### Probleme bei der Fehlererkennung

Leitungspotentiale im Fehlerzustand lassen sich von den Potentialen bei der normalen Datenübertragung nicht immer eindeutig unterscheiden. Beispielsweise ist bei Fehler 5 die Leitung 11 ebenso auf Massepotential wie im normalen rezessiven Zustand. Bei Fehler 4 ist die Leitung 12 gleichermaßen auf Massepotential wie im dominanten Zustand. Durch den großen Masseversatz zwischen den Stationen des Systems, der auftreten kann, verschärft sich das Problem der Unterscheidungsmöglichkeit. Lediglich Fehler 3 und 6 führen zu Leitungspotentialen, die von denen während der normalen Datenübertragung eindeutig unterscheidbar sind. Andere Fehler, die im Ruhezustand, d.h. wenn momentan keine Datenübertragung erfolgt, nicht unterschieden werden können, müssen dennoch unterschiedlich berücksichtigt werden. Wird z.B. der Anfang einer Datenfolge bei bestehendem Fehler 1 übertragen, sind beide Leitungen zunächst rezessiv, und nur die Leitung 12 wird dann dominant, und es kann auch weiter dann nur auf der intakten Leitung 12 übertragen werden. Tritt andererseits der Fehler 4 ein, während beide Leitungen rezessiv sind, geht auch hier die Leitung 12 in den dominanten Zustand über, allerdings muß die weitere Datenübertragung über die Leitung 11 erfolgen. Beide Fehler müssen also unterscheidbar sein, was nur mit zusätzlichem Aufwand möglich ist.

### Fehleranalyse

Zum Datenempfang werden die drei Komparatoren 21, 22 und 23 verwendet. Die differentielle Schwellspannung des Komparators 21 ist dabei auf -2,8V gelegt, so daß sowohl der dominante Zustand einer der beiden Leitungen allein als auch beider Leitungen zusammen zu einem dominanten Signal am Komparatorausgang führt. Der Komparator 22 wertet nur den Zustand der Leitung 11 aus und hat eine Schwellspannung von 1,8V, während der Komparator 23 nur den Zustand der Leitung 12 auswertet und eine Schwellspannung von 3,0V hat.

Im fehlerfreien Zustand werden die Daten über den Komparator 21 empfangen bzw. ausgewertet. Der differentielle Empfang erhöht die Zuverlässigkeit der Datenübertragung bei Masseversatz zwischen den Stationen und EMV-Störungen.

Die Fehler 1, 2 und 5 werden durch die angegebene Wahl der Schwellspannung des Komparators 21 ohne weiteres toleriert. Dies ist wichtig, da selbst bei statischem Fehlervorkommen die Fehler 1 und 2 gegebenenfalls als repetierende Fehler in Erscheinung treten. Dies ergibt sich durch wechselnde Position der jeweils sendenden Station bezüglich der Fehlerstelle. Um den Fehler jedoch anzeigen zu können, muß er trotzdem erkannt werden. Dies geschieht durch einen Vergleich der von den Komparatoren 22 und 23 abgegebenen Signale, die von den beiden Leitungen allein erzeugt werden, mit dem vom Komparator 21 abgegebenen Signal, der das differentielle Signal beider Leitungen auswertet. Hierzu werden die Signalflanken am Komparator 21 in zwei getrennten Zählern gezählt, eine Flanke an den Komparatoren 22 oder 23 setzt den zugeordneten Zähler immer sofort zurück.

Gibt der Komparator 21 also z.B. sieben Flanken nacheinander und einer der Komparatoren 22 oder 23 in derselben Zeit keine Flanke ab, wird ein Fehler festgestellt. Er gilt als beendet, wenn der betreffende Komparator wieder eine Flanke abgibt.

Beim Fehler 3 hat die Leitung 11 das Potential der Versorgungsspannung, was eindeutig mit dem Komparator 24 durch seine Schwellspannung von 7,3V gegen Masse festgestellt wird. Das Ausgangssignal des Komparators wird über ein Filter mit einer Verzögerungszeit von 10 bis 60µs in dem zugeordneten Speicher gespeichert, um ein Ansprechen durch mögliche Störsignale, die die Schwellspannung kurzzeitig überschreiten, zu vermeiden. Bei Aufhebung des Fehlers wird der Speicher zurückgesetzt, wenn der Komparator wenigstens eine vorgegebene Zeit lang kein Signal mehr abgibt, d.h. die Leitung 11 führt ein Potential unterhalb der genannten Schwellspannung, oder noch besser durch ein Signal am Komparator 21, denn dann führt die Leitung 11 sogar rezessives Potential.

Beim Fehler 6 hat die Leitung 12 das Potential der Versorgungsspannung, was durch den Komparator 25 mit einer Schwellspannung ebenfalls von 7,3V gegen Masse erkannt wird. Dessen Ausgangssignal setzt ebenfalls über ein Filter einen zugeordneten Speicher, der bei Beendigung des Fehlers und damit bei Beendigung des Ausgangssignals des Komparators 25, allerdings über ein Filter mit wesentlich höherer Verzögerungszeit von 150 bis 1000µs wieder zurückgesetzt wird. Diese höhere Verzögerungszeit soll verhindern, daß durch eine Datenübertragung während der Umschaltung vom Bereitschaftszustand auf den normalen Betrieb der Speicher unnötig umgeschaltet wird.

Beim Fehler 4 hat die Leitung 12 Kurzschluß mit Masse und führt damit dauernd dominantes Signal, während beim Fehler 7 die beiden Leitungen kurzgeschlossen sind und damit immer eine von beiden Leitungen dominantes Signal führt, so daß der Komparator 21 ständiges dominantes Signal abgibt. Wenn dieses Signal eine vorgegebebene Zeitdauer anhält, wird ein weiterer Speicher gesetzt. Diese vorgegebene Zeitdauer muß größer sein als die Dauer der maximalen Anzahl von dominanten Bits bei einer Datenübertragung. Das Ende des Fehlers 4 oder 7 wird durch ein genügend langes rezessives Ausgangssignal am Komparator 21 erkannt, wodurch der betreffende Speicher zurückgesetzt wird.

Die Fehler werden unabhängig voneinander erkannt, jedoch führen manche Fehler dazu, daß beim Auftreten eines Fehlers oder nach Ablauf aller Zeitbedingungen im eingeschwungenen Zustand mehrere Fehler gleichzeitig festgestellt werden. Durch eine Prioritätsschaltung mit der Prioritätsfolge Fehler 3, Fehler 6, Fehler 4 oder 7 wird genaue einer der möglichen Fehler gemeldet.

### Fehlerbehandlung

Im Fehlerfall wird nach Möglichkeit die ungestörte Leitung für die weitere Datenübertragung verwendet. Dazu werden abhängig vom festgestellten Fehler die Ausgänge der Komparatoren 22 oder 23, die Potentialübergänge auf den Leitungen 11 oder 12 allein auswerten, statt des Ausgangs des Komparators 21 auf den Datenausgang geschaltet. Außerdem wird bei einigen Fehlern einer der Abschlußwiderstände abgeschaltet sowie die Ansteuerung eines der Sendeschalter verhindert.

Bei Fehler 3 fällt die Leitung 11 aus, und der Komparator 23 für die Leitung 12 wird auf den Datenausgang geschaltet. Der Abschlußwiderstand der Leitung 11 wird abgeschaltet, und die Ansteuerung des Sendeschalters für die Leitung 11 wird blockiert.

Beim Fehler 6 ist die Leitung 12 gestört, daher wird der Ausgang des Komparators 22, der die Leitung 11 auswertet, auf den Datenausgang geschaltet und der Abschlußwiderstand der Leitung 12 abgeschaltet sowie die Ansteuerung des Sendeschalters für die Leitung 12 blockiert.

Beim Fehler 7 sind beide Leitungen kurzgeschlossen, so daß die Ansteuerung und Auswertung der Signale einer der beiden Leitungen abgeschaltet wird. Dies ist zweckmäßig die Leitung 12, so daß die weitere Datenübertragung über die Leitung 11 erfolgt, wobei der Abschlußwiderstand für die Leitung 12 abgeschaltet und die Ansteuerung des Sendeschalters für die Leitung 12 blockiert wird. Diese Maßnahmen entsprechen dem Fehler 6, und der Ausgang des Komparators 22 wird mit dem Datenausgang verbunden. Die gleichen Maßnahmen werden auch beim Fehler 4 vorgenommen, bei dem die Leitung 12 gestört ist.

### Fehlerbehandlung im Bereitschaftszustand

Im Bereitschaftszustand ist keine Datenübertragung möglich, und das System befindet sich in einem Zustand geringer Stromaufnahme. Die Fehler 1, 2, 5 und 6 führen in diesem Zustand nicht zu einer erhöhten Stromaufnahme. Lediglich die Fehler 3, 4 und 7 müssen erkannt und eine erhöhte Stromaufnahme vermieden werden. Dazu werden drei weitere Komparatoren 91, 92 und 93 verwendet, von denen die Komparatoren 91 und 92 den Zustand der Leitung 11 und der Komparator 93 den Zustand der Leitung 12 auswertet. Der Komparator 91 hat einen Schwellwert von etwa 2V unterhalb der Versorgungsspannung, der Komparator 92 hat einen Schwellwert von etwa 2V zur Feststellung des dominanten Zustands auf der Leitung 11, und der Komparator 93 hat einen Schwellwert von ca. 3V zur Feststellung des dominanten Zustands auf der Leitung 12.

Bei Fehler 3 hat die Leitung 11 einen Kurzschluß mit Versorgungsspannung, so daß Komparator 91 anspricht. Über eine Zeitverzögerung wird der Abschlußwiderstand der Leitung 11 abgeschaltet.

Beim Fehler 4 hat die Leitung 12 Kurzschluß nach Masse, wodurch der Komparator 93 anspricht. Ebenfalls nach einer Zeitverzögerung wird daher der Abschlußwiderstand der Leitung 12 abgeschaltet.

Bei der Erkennung des Fehlers 7 muß ein großer Spannungsbereich der Versorgungsspannung berücksichtigt werden. Der resultierende Abschlußwiderstand reicht je nach Anzahl der Stationen im System von ca. 100 bis 200 Ohm für die Leitung 11 nach Masse und von 250 bis 5000 Ohm für die Leitung 12 nach Versorgungsspannung. Dadurch werden beim Fehler 7, d.h. beim Kurzschluß zwischen den Leitungen 11 und 12, Spannungen von ca. 0,3 bis 8V erreicht. Dadurch erzeugt mindestens einer der Komparatoren 92 oder 93 ein Ausgangssignal. Eine ODER-Verknüpfung dieser Komparaturausgänge schaltet über ein Zeitverzögerung den Abschlußwiderstand der Leitung 12 ab. Durch das im System verteilte Abschalten dieser Abschlußwiderstände geht das Potential auf den beiden kurzgeschlossenen Leitungen 11 und 12 zunehmend gegen Masse. Durch die überlappenden Schwellspannungen an Komparatoren 92 und 93 ist gewährleistet, daß beim Durchlaufen des Spannungsbereichs mindestens einer dieser Komparatoren ein Ausgangssignal abgibt. Nach Abschalten aller Abschlußwiderstände liefert schließlich Komparator 93 ein Ausgangssignal.

Es muß berücksichtigt werden, daß beim Fehler 3 ebenfalls der Komparator 92 ein Ausgangssignal erzeugt, obwohl bei diesem Fehler der Abschlußwiderstand der Leitung 11 abgeschaltet wird. Das Ausgangssignal des Komparators 92 wird daher durch das Ausgangssignal des Komparators 91 verriegelt. Eine zusätzliche Verriegelung des Abschaltsignals für den Abschlußwiderstand der Leitung 12 durch das Signal für das Abschalten des Abschlußwiderstandes der Leitung 11 verhindert, daß bei keinem Fehlerfall und bei keinem Übergangszustand beide Abschlußwiderstände gleichzeitig abgeschaltet werden.

Es ist also gewährleistet, daß im Betriebszustand bei jedem Fehlerfall eine logisch noch vorhandene Möglichkeit zur Datenübertragung auch ausgewertet wird, während im Bereitschaftszustand bei jedem möglichen Fehlerfall eine erhöhte Leistungsaufnahme zuverlässig verhindert wird.

## Patentansprüche

1. System zum Übertragen von binären Daten zwischen einer Anzahl Stationen (1, 2, 3), die über eine gemeinsame erste und eine gemeinsame zweite Leitung (11, 12) miteinander verbunden sind, wobei beim einen logischen Wert der binären Daten die erste Leitung (11) ein niedriges Potential und die zweite Leitung (12) ein hohes Potential und beim anderen logischen Wert der binären Daten die erste Leitung (11) ein hohes Potential und die zweite Leitung (12) ein niedriges Potential hat und der logische Wert der binären Daten zum Abgeben an einem Datenausgang von dem Potential wenigstens einer Leitung (11, 12) abgeleitet ist,
dadurch gekennzeichnet, daß in wenigstens einer ersten Station wenigstens ein erster Komparator (21) vorgesehen ist, der mit beiden Leitungen (11, 12) galvanisch gekoppelt ist, um das Potential auf der ersten Leitung (11) vom Potential auf der zweiten Leitung (12) zu subtrahieren und ein Ausgangssignal mit einem ersten Wert an einem ersten Komparatorausgang (31) abzugeben, wenn die durch die Subtraktion gebildete Differenz einen ersten Schwellenwert übersteigt, wobei dieser erste Schwellenwert so gewählt ist, daß das Ausgangssignal am ersten Komparator (21) auch dann seinen Wert ändert, wenn nur auf einer der beiden Leitungen (11, 12) ein Potentialwechsel auftritt und die andere Leitung (11, 12) ein Potential entsprechend dem einen logischen Wert der binären Daten hat.

2. System nach Anspruch 1,
dadurch gekennzeichnet, daß in jeder ersten Station (1, 2, 3) ein zweiter Komparator (22) vorgesehen ist, der mit der ersten Leitung (11) gekoppelt ist, um ein Ausgangssignal mit dem ersten Wert an einem zweiten Komparatorausgang zu erzeugen, wenn das Potential auf der ersten Leitung (11) unterhalb eines zweiten Schwellenwerts liegt, und daß ein erster Speicher (61) vorgesehen ist, der über ein erstes Verzögerungsglied (64) mit einer ersten Verzögerungszeit mit dem ersten Komparatorausgang (21) gekoppelt ist und von dem ein Ausgang mit einem Umschalter (29) gekoppelt ist, um den Datenausgang vom ersten Komparatorausgang (21) auf den zweiten Komparatorausgang (22) zu schalten, wenn während einer Zeitdauer entsprechend der ersten Verzögerungszeit das Ausgangssignal am ersten Komparatorausgang (21) ständig den ersten Wert hat.

3. System nach Anspruch 2,
dadurch gekennzeichnet, daß in jeder ersten Station der erste Speicher (61) ferner über ein zweites Verzögerungsglied (66) mit einer zweiten Verzögerungszeit mit dem ersten Komparatorausgang (21) derart gekoppelt ist, daß der erste Speicher (61) den Umschalter (29) derart umschaltet, daß der Datenausgang vom zweiten Komparatorausgang (22) auf den ersten Komparatorausgang (21) zurückgeschaltet wird, wenn während einer Zeitdauer entsprechend der zweiten Verzögerungszeit das Ausgangssignal am ersten Komparatorausgang (21) nicht den ersten Wert hat.

4. System nach Anspruch 1, 2 oder 3,
dadurch gekennzeichnet, daß eine Versorgungsspannung vorgesehen ist, von der in wenigstens einigen Stationen eine niedrigere Betriebsspannung zum Betrieb einer elektrischen Schaltung in den Stationen zum Ansteuern der ersten und der zweiten Leitung (11, 12) abgeleitet ist, wobei wenigstens ein Teil dieser Stationen über eine die Versorgungsspannung führende dritte Leitung (13) verbunden sind, daß in jeder zu diesen Stationen gehörenden ersten Station ein dritter (23), ein vierter (24) und ein fünfter (25) Komparator vorgesehen sind, von denen der dritte Komparator (23) mit der zweiten Leitung (12) gekoppelt ist, um ein Ausgangssignal mit dem ersten Wert an einen dritten Komparatorausgang zu erzeugen, wenn das Potential auf der zweiten Leitung oberhalb eines dritten Schwellenwerts liegt, von denen der vierte Komparator (24) mit der ersten Leitung (11) und der fünfte Komparator (25) mit der zweiten Leitung (12) gekoppelt ist und jeder dieser beiden Komparatoren (24, 25) ein Ausgangssignal mit einem ersten Wert an einem vierten bzw. fünften Komparatorausgang erzeugt, wenn das Potential auf der mit dem betreffenden Komparator gekoppelten Leitung einen vierten Schwellenwert übersteigt, der zwischen der Betriebsspannung und der Versorgungsspannung liegt, daß ein zweiter und ein dritter Speicher (62, 63) vorgesehen sind, von denen jeder einen ersten und einen zweiten Eingang und einen Ausgang aufweist, wobei der erste Eingang des zweiten Speichers (62) mit dem ersten Komparatorausgang, der zweite Eingang des zweiten Speichers (62) mit dem vierten Komparatorausgang, der erste Eingang des dritten Speichers (63) mit dem fünften Komparatorausgang und der zweite Eingang des dritten Speichers (63) über ein drittes Verzögerungsglied (68) mit einer dritten Verzögerungszeit mit dem fünften Komparatorausgang gekoppelt sind und daß der Ausgang des zweiten Speichers (62) mit dem Umschalter gekoppelt ist, um den dritten Komparatorausgang mit dem Datenausgang (40) zu koppeln, und der Ausgang des dritten Speichers (63) mit dem Umschalter (29) gekoppelt ist, um den zweiten Komparatorausgang mit dem Datenausgang (40) zu koppeln.

5. System nach Anspruch 4 mit einem Fehleranzeigeausgang,
dadurch gekennzeichnet, daß in jeder ersten Station ein erster (51) und ein zweiter (54) Zähler vorgesehen sind, von denen jeder einen Zähleingang, einen Rücksetzeingang und einen Zählerausgang aufweist, wobei der Zähleingang beider Zähler mit dem ersten Komparatorausgang, der Rücksetzeingang des ersten Zählers (51) mit dem zweiten Komparatorausgang, der Rücksetzeingang des zweiten Zählers (54) mit dem dritten Komparatorausgang und der Zählerausgang beider Zähler (51, 54) sowie der Ausgang der Speicher mit dem Fehleranzeigeausgang gekoppelt sind.

6. System nach einem der Ansprüche 1 bis 5,
dadurch gekennzeichnet, daß in jeder Station jede Leitung über einen zugeordneten Schalter (6, 7) mit dem Potential für den anderen logischen Wert der binären Daten gekoppelt ist und eine Ansteuerschaltung (5) vorgesehen ist, die zum Übertragen des anderen logischen Werts der binären Daten im fehlerfreien Fall beide Schalter schließt, und daß in einem Fehlerfall, bei dem wenigstens eine der beiden Leitungen (11, 12) niederohmig mit einer Spannung zumindest abweichend von dem Potential entsprechend dem anderen logischen Wert der binären Daten verbunden ist, die Ansteuerschaltung (5) das Schließen des dieser Leitung zugeordneten Schalters (6, 7) verhindert.

7. System nach Anspruch 4, 5 oder 6,
dadurch gekennzeichnet, daß in jeder ersten Station die erste Leitung (11) über einen ersten Widerstand (14) mit dem niedrigen Potential und die zweite Leitung (12) über einen zweiten Widerstand (15) mit dem hohen Potential gekoppelt ist, daß in Reihe mit dem ersten Widerstand (14) ein erster Schalter (76) und in Reihe mit dem zweiten Widerstand (15) ein zweiter Schalter (77) angeordnet sind und daß der Ausgang des zweiten Speichers (62) mit dem ersten Schalter (76) gekoppelt ist und die Ausgänge des ersten (61) und dritten (63) Speichers gemeinsam mit dem zweiten Schalter (77) gekoppelt sind.

8. System nach Anspruch 7,
dadurch gekennzeichnet, daß in einem Bereitschaftszustand, in dem die Stromaufnahme insbesondere durch Abschalten der Betriebsspannung für wenigstens einen Teil der Elemente der Station, insbesondere der Komparatoren (21-25), der Speicher (61-63) und der Zähler (51, 54) wesentlich verringert ist, die zweite Leitung (12) über einen dritten, höheren Widerstand (17) nur mit der höheren Versorgungsspannung gekoppelt ist und daß zwei weitere Komparatoren (91, 93) vorgesehen sind, die im Bereitschaftszustand aktiv sind und von denen ein erster weiterer Komparator (91) mit der ersten Leitung (11) gekoppelt ist, um ein Ausgangssignal mit einem ersten Wert an einem ersten weiteren Komparatorausgang zu erzeugen, wenn das Potential auf der ersten Leitung einen vorgegebenen fünften Schwellenwert überschreitet, wobei der erste weitere Komparatorausgang mit dem ersten Schalter (76) gekoppelt ist,
ein zweiter weiterer Komparator (93) mit der zweiten Leitung gekoppelt ist, um ein Ausgangssignal mit einem ersten Wert an einem zweiten weiteren Komparatorausgang zu erzeugen, wenn das Potential auf der zweiten Leitung (12) einen vorgegebenen sechsten Schwellenwert unterschreitet, wobei der zweite weitere Komparatorausgang mit dem zweiten Schalter (77) gekoppelt ist.

9. System nach Anspruch 8,
dadurch gekennzeichnet, daß ein dritter weiterer Komparator (92) vorgesehen ist, der im Bereitschaftszustand aktiv ist und der mit der ersten Leitung (11) gekoppelt ist, um ein Ausgangssignal mit einem ersten Wert an einem dritten weiteren Komparatorausgang zu erzeugen, wenn das Potential auf der ersten Leitung (11) einen vorgegebenen siebten Schwellenwert überschreitet, wobei der dritte weitere Komparatorausgang ebenfalls mit dem ersten Schalter (76) gekoppelt ist, wenn der erste weitere Komparatorausgang nicht ein Ausgangssignal mit dem ersten Wert erzeugt.

## Claims

1. A system for the transmission of binary data between a number of stations (1, 2, 3) which are interconnected via a common first line and a common second line (11, 12), the first line (11) having a low potential and the second line (12) a high potential for one logic value of the binary data whereas the first line (11) has a high potential and the second line (12) a low potential for the other logic value of the binary data, the logic value of the binary data being derived from the potential of at least one line (11, 12), for output on a data output,
characterized in that in at least a first station there is provided at least one first comparator (21) which is conductively coupled to both lines (11, 12) in order to subtract the potential on the first line (11) from the potential on the second line (12) and to output an output signal of a first value via a first comparator output (31) if the difference formed by the subtraction exceeds a first threshold value, said first threshold value being chosen so that the output signal of the first comparator (21) also changes its value if a potential transition occurs on only one of the two lines (11, 12) and the other line (11, 12) has a potential corresponding to the one logic value of the binary data.

2. A system as claimed in Claim 1,
characterized in that in each first station (1, 2, 3) there is provided a second comparator (22) which is coupled to the first line (11) in order to generate an output signal of the first value on a second comparator output if the potential on the first line (11) is below a second threshold value, and that there is provided a first memory (61) which is coupled to the first comparator output (21) via a first delay member (64) having a first delay time, an output of said memory being coupled to a switch (29) for switching the data output from the first comparator output (21) to the second comparator output (22) if the output signal on the first comparator output (21) continuously has the first value for a period of time corresponding to the first delay time.

3. A system as claimed in Claim 2,
characterized in that the first memory (61) in each first station is also coupled, via a second delay member (66) having a second delay time, to the first comparator output (21) in such a manner that the first memory (61) switches over the switch (29) in such a manner that the data output is switched back from the second comparator output (22) to the first comparator output (21) if the output signal on the first comparator output (21) does not have the first value for a period of time corresponding to the second delay time.

4. A system as claimed in Claim 1, 2 or 3, characterized in that it utilizes a supply voltage wherefrom a lower operating voltage is derived in at least some stations for operation of an electric circuit in the stations in order to drive the first and the second line (11, 12), at least a part of these stations being connected via a third line (13) which carries the supply voltage, that in each first station belonging to these stations there are provided a third (23), a fourth (24) and a fifth comparator (25), the third comparator (23) being coupled to the second line (12) in order to generate an output signal of the first value on a third comparator output if the potential on the second line exceeds a third threshold value, the fourth comparator (24) being coupled to the first line (11) and the fifth comparator (25) being coupled to the second line (12), each of the latter two comparators (24, 25) generating an output signal of a first value on a fourth and a fifth comparator output, respectively, if the potential on the line coupled to the relevant comparator exceeds a fourth threshold value which is valued between the operating voltage and the supply voltage, that there are provided a second and a third memory (62, 63), each of which comprises a first and a second input and an output, the first input of the second memory (62) being connected to the first comparator output, the second input of the second memory (62) to the fourth comparator output, the first input of the third memory (63) to the fifth comparator output, and the second input of the third memory (63) to the fifth comparator output via a third delay member (68) having a third delay time, and that the output of the second memory (62) is coupled to the switch so as to couple the third comparator output to the data output (40), the output of the third memory (63) being coupled to the switch (29) so as to couple the second comparator output to the data output (40).

5. A system as claimed in Claim 4, comprising a fault indication output, characterized in that in each first station there are provided a first (51) and a second counter (52), each of which comprises a count input, a reset input and a count output, the count input of both counters being coupled to the first comparator output, the reset input of the first counter (51) to the second comparator output, the reset input of the second counter (54) to the third comparator output, and the count output of both counters (51, 54) as well as the output of the memories being coupled to the fault indication output.

6. A system as claimed in one of the Claims 1 to 5, characterized in that each line in each station is coupled, via an associated switch (6, 7), to the potential for the other logic value of the binary data and a drive circuit (5) is provided which closes both switches in order to transmit the other logic value of the binary data in the fault-free case, and that in the case of a fault, where at least one of the two lines (11, 12) is low-impedance connected to a voltage which at least deviates from the potential corresponding to the other logic value of the binary data, the drive circuit (5) prevents the closing of the switch (6, 7) associated with the relevant line.

7. A system as claimed in Claim 4, 5 or 6, characterized in that the first line (11) in each first station is coupled to the low potential via a first resistor (14), and the second line (12) is coupled to the high potential via a second resistor (15), that a first switch (76) is connected in series with the first resistor (14) and a second switch (77) is connected in series with the second resistor (15), and that the output of the second memory (62) is coupled to the first switch (76) and the outputs of the first (61) and the third memory (63) are coupled together to the second switch (77).

8. A system as claimed in Claim 7,
characterized in that in a standby state, in which the power consumption is substantially reduced, notably by switching off the operating voltage for at least a part of the elements of the station, in particular the comparators (21-25), the memories (61-63) and the counters (51, 54), the second line (12) is coupled only to the higher supply voltage, via a third, larger resistor (17), and that there are provided two further comparators (91, 93) which are active in the standby state, a first further comparator (91) being coupled to the first line (11) in order to generate an output signal of a first value on a first further comparator output if the potential on the first line exceeds a predetermined fifth threshold value, the first further comparator output being coupled to the first switch (76), a second further comparator (93) being coupled to the second line in order to generate an output signal of a first value on a second further comparator output if the potential on the second line (12) drops below a predetermined sixth threshold value, the second further comparator output being coupled to the second switch (77).

9. A system as claimed in Claim 8,
characterized in that there is provided a third further comparator (92) which is active in the standby state and is coupled to the first line (11) in order to generate an output signal of a first value on a third further comparator output if the potential on the first line (11) exceeds a predetermined seventh threshold value, the third further comparator output also being coupled to the first switch (76) if the first further comparator output does not generate an output signal of the first value.

## Revendications

1. Système de transmission de données binaires entre plusieurs stations (1, 2, 3) qui sont reliées entre elles par l'intermédiaire d'une première ligne commune et d'une deuxième ligne commune (11, 12), la première ligne (11) ayant un potentiel faible et la deuxième ligne (12) un potentiel élevé pour une valeur logique des données binaires et la première ligne (11) ayant un potentiel élevé et la deuxième ligne (12) un potentiel faible pour l'autre valeur logique des données binaires et la valeur logique des données binaires étant dérivée en vue de la délivrance à une sortie de données du potentiel d'au moins une ligne (11, 12),
caractérisé en ce quel dans au moins une première station, il est prévu au moins un premier comparateur (21) qui présente un couplage galvanique avec les deux lignes (11, 12) pour soustraire le potentiel sur la première ligne (11) du potentiel sur la deuxième ligne (12) et délivrer un signal de sortie avec une première valeur à une première sortie du comparateur (31) lorsque la différence formée par la soustraction dépasse une première valeur seuil. cette première valeur seuil étant choisie de telle sorte que le signal de sortie à hauteur du premier comparateur (21) change également de valeur lorsque un changement de potentiel se produit uniquement sur l'une des deux lignes (11, 12) et que l'autre ligne (11, 12) a un potentiel correspondant à une valeur logique des données binaires.

2. Système selon la revendication 1.
caractérisé en ce que, dans chaque première station (1, 2, 3), il est prévu un deuxième comparateur (22) qui est couplé à la première ligne (11) pour produire un signal de sortie avec la première valeur à une deuxième sortie du comparateur lorsque le potentiel sur la première ligne (11) se situe sous une deuxième valeur seuil et qu'une première mémoire (61) est prévue et couplée par l'intermédiaire d'un premier organe de retardement (64) avec un premier temps de retard à la première sortie du comparateur (21) et une sortie de celle-ci est couplée à un commutateur (29) pour commuter la sortie de données de la première sortie du comparateur (21) à la deuxième sortie du comparateur (22) lorsque, pendant un intervalle de temps correspondant au premier temps de retard, le signal de sortie a en permanence la première valeur à la première sortie du comparateur (21).

3. Système selon la revendication 2,
caractérisé en ce que, dans chaque première station, la première mémoire (61) est par ailleurs couplée par l'intermédiaire d'un deuxième organe de retardement (66) avec un deuxième temps de retard à la première sortie du comparateur (21) de telle sorte que la première mémoire 61 commute le commutateur (29) de telle sorte que la sortie de données soit recommutée par la deuxième sortie du comparateur (22) sur la première sortie du comparateur (21) lorsque, pendant un intervalle de temps correspondant au deuxième temps de retard, le premier signal de sortie n'a pas la première valeur à la première sortie du comparateur (21).

4. Système selon l'une des revendications 1, 2 ou 3,
caractérisé en ce qu'il est prévu une tension d'alimentation de laquelle est dérivée, dans au moins quelques stations, une tension de fonctionnement inférieure en vue du fonctionnement d'un circuit électrique dans les stations pour l'excitation des première et deuxième lignes (11,12), au moins une partie de ces stations étant reliée par l'intermédiaire d'une troisième ligne (13) conduisant la tension d'alimentation, que, dans chaque première station appartenant à ces stations, il est prévu des troisième (23), quatrième (24) et cinquième (25) comparateurs dont le troisième comparateur (23) est couplé à la deuxième ligne (12) pour produire un signal de sortie avec la première valeur à une troisième sortie de comparateur lorsque le potentiel sur la deuxième ligne se situe au-delà d'une troisième valeur seuil, dont le quatrième comparateur (24) est couplé à la première ligne (11) et le cinquième comparateur (25) est couplé à la deuxième ligne (12) et chacun de ces deux comparateurs (24, 25) produit un signal de sortie avec une première valeur à une quatrième ou cinquième sortie du comparateur lorsque le potentiel dépasse une quatrième valeur seuil sur la ligne couplée au comparateur correspondant, valeur qui se situe entre la tension de fonctionnement et la tension d'alimentation, qu'il est prévu une deuxième et une troisième mémoires (62, 63) dont chacune présente une première et une deuxième entrées et une sortie, la première entrée de la deuxième mémoire (62) étant couplée à la première sortie du comparateur. la deuxième entrée de la deuxième mémoire (62) à la quatrième sortie du comparateur, la première entrée de la troisième mémoire (62) à la cinquième sortie du comparateur et la deuxième entrée de la troisième mémoire (63) par l'intermédiaire d'un troisième organe de retardement (68) avec un troisième temps de retard à la cinquième sortie du comparateur et que la sortie de la deuxième mémoire (62) est couplée au commutateur pour coupler la troisième sortie du comparateur à la sortie de données (40) et la sortie de la troisième mémoire (63) est couplée au commutateur (29) pour coupler la deuxième sortie du comparateur à la sortie de données (40).

5. Système selon la revendication 4, avec une sortie d'affichage des erreurs,
caractérisé en ce qu'il est prévu dans chaque première station des premier (51) et deuxième compteurs (54) dont chacun présente une entrée de comptage, une entrée de réinitialisation et une sortie de compteur, l'entrée de comptage des deux compteurs étant reliée à la première sortie du comparateur, l'entrée de réinitialisation du premier compteur (51) à la deuxième sortie du comparateur, l'entrée de réinitialisation du deuxième compteur (54) à la troisième sortie du comparateur et la sortie de compteur des deux compteurs (51, 54) ainsi que la sortie des mémoires à la sortie d'affichage des erreurs.

6. Système selon l'une des revendications 1 à 5,
caractérisé en ce que, dans chaque station, chaque ligne est couplée par l'intermédiaire d'un commutateur affecté (6, 7) au potentiel pour l'autre valeur logique des données binaires et il est prévu un circuit d'excitation (5) qui, en cas de transmission de l'autre valeur logique des données binaires dans le cas exempt d'erreur, ferme les deux commutateurs et que, dans un cas d'erreur dans lequel au moins l'une des deux lignes (11, 12) est reliée à basse impédance avec une tension s'écartant pour le moins du potentiel correspondant à l'autre valeur logique des données binaires, le circuit d'excitation (5) empêche la fermeture du commutateur (6, 7) affecté à cette ligne.

7. Système selon l'une des revendications 4, 5 ou 6,
caractérisé en ce que la première ligne (11) dans chaque première station est couplée par l'intermédiaire d'une première résistance (14) au faible potentiel et la deuxième ligne (12) par l'intermédiaire d'une deuxième résistance (15) au potentiel élevé, qu'en série avec la première résistance (14) est disposé un premier commutateur (76) et en série avec la deuxième résistance (15) un deuxième commutateur (77) et que la sortie de la deuxième mémoire (62) est couplée au premier commutateur (76) et les sorties des première (61) et troisième (63) mémoires sont couplées ensemble au deuxième commutateur (77).

8. Système selon la revendication 7,
caractérisé en ce que, dans un état d'attente dans lequel la consommation électrique est essentiellement réduite, en particulier par mise hors tension de la tension de fonctionnement pour au moins une partie des éléments de la station, en particulier des comparateurs (21 - 25), des mémoires (61-63) et des compteurs (51, 54), la deuxième ligne (12) est couplée seulement, par l'intermédiaire d'une troisième résistance plus élevée (17) avec la tension d'alimentation supérieure et qu'il est prévu deux autres comparateurs (91, 93) actifs dans l'état d'attente dont un premier comparateur supplémentaire (91) est couplé à la première ligne (11) pour produire un signal de sortie avec une première valeur à une première sortie supplémentaire du comparateur lorsque le potentiel sur la première ligne dépasse une cinquième valeur seuil préalablement déterminée, la première sortie supplémentaire du comparateur étant couplée au premier commutateur (76), un deuxième comparateur supplémentaire (93) à la deuxième ligne pour produire un signal de sortie avec une première valeur à une deuxième sortie supplémentaire du comparateur lorsque le potentiel sur la deuxième ligne (12) passe sous une sixième valeur seuil préalablement déterminée, la deuxième sortie supplémentaire du comparateur étant couplée au deuxième commutateur (77).

9. Système selon la revendication 8,
caractérisé en ce qu'il est prévu un troisième comparateur supplémentaire (92) actif dans l'état d'attente et couplé avec la première ligne (11) pour produire un signal de sortie avec une première valeur sur une troisième sortie supplémentaire du comparateur lorsque le potentiel sur la première ligne dépasse une septième valeur seuil préalablement déterminée, la troisième sortie supplémentaire du comparateur étant également couplée avec le premier commutateur (76) lorsque la première sortie supplémentaire du comparateur ne produit pas un signal de sortie avec la première valeur.
